# EUROPÄISCHE PATENTSCHRIFT

(11) **EP 4 424 616 B1**
(45) Veröffentlichungstag und Bekanntmachung des Hinweises auf die Patenterteilung: **19.11.2025**
(21) Anmeldenummer: 24160349.7
(22) Anmeldetag: 28.02.2024
(51) Int. Cl.: B65G 1/04

(54) **SHUTTLE-SYSTEM UND VERFAHREN ZUM BETREIBEN EINES SHUTTLE-SYSTEMS**
SHUTTLE SYSTEM AND METHOD FOR OPERATING A SHUTTLE SYSTEM
SYSTÈME DE NAVETTE ET PROCÉDÉ DE FONCTIONNEMENT D'UN SYSTÈME DE NAVETTE

(30) Priorität: 03.03.2023 DE 102023105279
(43) Veröffentlichungstag der Anmeldung: 04.09.2024
(73) Patentinhaber: Gebhardt Fördertechnik GmbH, D-74889 Sinsheim (DE)
(72) Erfinder: GEBHARDT, Marco, 74889 Sinsheim (DE)
(74) Vertreter: Patentanwälte und Rechtsanwalt Weiß, Arat & Partner mbB

(56) Entgegenhaltungen:
- CA-A1- 2 937 669
- CN-A- 114 435 833
- US-B1- 10 294 026

## Beschreibung

### Technisches Gebiet

Die vorliegende Erfindung betrifft ein Shuttle-System und ein Verfahren zum Betreiben eines solchen Shuttle-Systems gemäss den unabhängigen Ansprüchen.

### Stand der Technik

Shuttle-Systeme und Verfahren zum Betreiben derselben sind aus dem Stand der Technik bekannt. CN 114 435 833 A offenbart hierbei jeweils den Oberbegriff der unabhängigen Ansprüche 1 und 10.

### Aufgabe der Erfindung

Die Aufgabe der vorliegenden Erfindung ist es, die Nachteile aus dem Stand der Technik zu überwinden.

### Lösung der Aufgabe

Zur Lösung der Aufgabe führen die Gegenstände der unabhängigen Ansprüche. Vorteilhafte Ausgestaltungen sind in den abhängigen Ansprüchen beschrieben.

Ein Shuttle-System gemäss der vorliegenden Erfindung umfasst einen Regalbau mit mehreren Regal-Ebenen, wobei die Regal-Ebenen Fahrwege für Shuttles umfassen. Das Shuttle-System kann ein Paletten-Lager, beispielsweise ein Paletten-Kanallager sein.

Das Shuttle-System kann zumindest ein Shuttle, vorzugsweise mehrere Shuttles umfassen, welche/s sich innerhalb der Regal-Ebenen auf den Fahrwegen bewegen kann/können.

Die Fahrwege können beispielsweise Fahrschienen sein, welche aus einem horizontal angeordneten Raster bestehend aus orthogonal zueinander verlaufenden und sich kreuzenden Fahrschienen bestehen. Die Shuttles können als Vier-Wege-Shuttles eingerichtet sein, sich innerhalb der Regal-Ebenen, insbesondere auf den Fahrschienen, beliebig horizontal fortzubewegen. Die Shuttles können als Paletten-Shuttles ausgeführt sein.

Das Shuttle-System umfasst zumindest einen Vertikalförderer, welcher eingerichtet ist, ein Shuttle oder ein Ladegut von einer ersten in eine zweite Regal-Ebene, d.h. von einer Regal-Ebene in eine andere Regal-Ebene, zu befördern. Das Ladegut kann beispielsweise eine Palette sein.

Das Shuttle-System umfasst ferner zumindest einen Bergewagen, mit dem eine Bedienperson in eine Regal-Ebene einfahren kann. Vorzugsweise befindet sich der Bergewagen in einem Normalbetriebs-Modus, wenn also kein Zwischenfall irgendeiner Art vorliegt und der Bergewagen nicht benötigt wird, dauerhaft in einer nachstehend noch beschriebenen Kabine eines Vertikalförderers.

Ein solcher Bergewagen erlaubt einer Bedienperson die Einfahrt in die Regal-Ebenen, welche in einem Normalbetriebs-Modus nur von Shuttles befahren werden. Die Bedienperson kann dann beispielsweise eine Störung beseitigen.

Da auf jeder Regal-Ebene des Regalbaus ein Einsatz des Bergewagens nötig werden kann, muss durch Anordnung des Bergewagens in der Kabine nicht auf jeder Regal-Ebene ein separater Bergewagen vorgehalten werden. Abhängig von einer Grösse des Regalbaus und beispielsweise einer Anzahl der Regal-Ebenen und/oder Lagerplätze und oder des Durchsatzes des Shuttle-Systems können ein oder zwei Bergewagen für das gesamte Shuttle-System ausreichen.

Der Vertikalförderer umfasst ein sich vertikal erstreckendes Gerüst und eine entlang dieses Gerüsts vertikal bewegliche Kabine. Das Gerüst ist vorzugsweise stationär und kann auch als geschlossener Aufzugsschacht, oder alternativ in Form eines Masts oder in Form mehrerer Maste oder dergleichen ausgeführt sein. Als Gerüst wird im Rahmen der vorliegenden Erfindung jede, vorzugsweise stationäre Struktur beschrieben, entlang der sich die Kabine vertikal bewegen kann. Vorzugsweise handelt es sich bei dem Vertikalförderer also um einen stationären Vertikalförderer, dessen Gerüst seine Position relativ zum Regalbau nicht ändert.

Die Kabine muss nicht geschlossen sein. Der Begriff "Kabine" umfasst im Rahmen der vorliegenden Erfindung sämtliche Einrichtungen, welche ein Ladegut oder ein Shuttle und einen Bergewagen aufnehmen und sich vertikal entlang des Gerüsts bewegen können.

Die Kabine umfasst einen ersten Aufnahmeabschnitt zur Aufnahme eines Shuttles oder Ladeguts und einen zweiten Aufnahmeabschnitt zur Aufnahme eines Bergewagens. Der erste Aufnahmeabschnitt kann der Aufnahme genau eines Shuttles oder Ladeguts dienen. Der zweite Aufnahmeabschnitt kann der Aufnahme genau eines Bergewagens dienen. Die Aufnahmeabschnitte können als Plattform ausgebildet sein. Die Aufnahmeabschnitte können vorwiegend oder ausschliesslich als Fahrschienen ausgebildet sein, welche in einer nachstehend noch näher beschriebenen Transfer-Position als Fortsetzung etwaiger in den Regal-Ebenen vorliegenden Fahrschienen dienen können. Insbesondere wenn der erste Aufnahmeabschnitt keine Shuttles, sondern ein Ladegut aufnehmen soll, kann dieser auch einen Horizontalförderer umfassen oder aus einem solchen gebildet sein, wobei an Teleskopgabeln, Bandförderer, Rollenförderer, Kettenförderer und dergleichen gedacht sein kann. Die vorgenannten Elemente können zusammenfassend auch als "aktive Lastaufnahmemittel" bezeichnet werden. Solche aktiven Lastaufnahmemittel sind eine von mehreren denkbaren Ausgestaltungen eines Aufnahmeabschnitts.

Die Kabine kann im Hinblick auf zumindest zwei Regal-Ebenen des Regalbaus jeweils eine Transfer-Position einnehmen, in welcher der erste und/oder der zweite Aufnahmeabschnitt sich im Wesentlichen auf Höhe einer angrenzenden Regal-Ebene befindet, so dass ein Shuttle und/oder ein Bergewagen von der Kabine in die angrenzende Regal-Ebene einfahren oder ein Ladegut in dieser Richtung übergeben werden kann, oder ein Shuttle oder Bergewagen aus der angrenzenden Regal-Ebene in die Kabine einfahren oder ein Ladegut in dieser Richtung übergeben werden kann.

Sollen ein Shuttle und ein Bergewagen gleichzeitig in dieselbe angrenzende Ebene einfahren können, so sind der erste und der zweite Aufnahmeabschnitt zweckmässigerweise nebeneinander angeordnet.

Grundsätzlich denkbar, aber in den meisten Ausführungsformen wenig praktikabel wäre es, den ersten und den zweiten Aufnahmeabschnitt nicht in derselben Kabine anzuordnen, sondern in irgendeiner Form als separate, unabhängig voneinander innerhalb des Gerüsts beweglich angeordnete Bauteile auszugestalten.

Die Übergabe eines Ladeguts kann durch ein geeignetes, insbesondere aktives Lastaufnahmemittel, beispielsweise eine Teleskopgabel erfolgen. Soll beispielsweise ein auf dem ersten Aufnahmeabschnitt des Vertikalförderers befindliches Ladegut an ein in der angrenzenden Regal-Ebene wartendes Shuttle übergeben werden, so kann dies geschehen, indem der erste Aufnahmeabschnitt als Teleskopgabel ausgebildet ist.

Alternativ kann die Übergabe eines Ladeguts beispielsweise erfolgen, indem das Shuttle in die Kabine des Vertikalförderers einfährt. Dort können, wie bereits erwähnt, entsprechende Fahrschienen vorhanden sein, wobei in der Kabine weiterhin geeignete Abstell-Schienen oder dergleichen vorhanden sein können, auf denen das Shuttle das Ladegut, beispielsweise eine Palette, abstellen kann. Nach dem Abstellen des Ladeguts kann das Shuttle den Vertikalförderer wieder verlassen, woraufhin der Vertikalförderer das Ladegut auf Höhe der gewünschten Regal-Ebene befördert.

Befördert der Vertikalförderer Shuttles vertikal, um ihnen einen Ebenen-Wechsel zu ermöglichen, so handelt es sich bei dem Shuttle-System um ein ungebundenes System. Befördert der Vertikalförderer hingegen Ladegüter vertikal, so handelt es sich um ein Ebenen-gebundenes System. In Ebenen-gebundenen Systemen wechseln die Shuttles "ihre" Ebenen nicht.

Der Vertikalförderer-vermittelte Ebenen-Wechsel von Shuttles in einem ungebundenen System wird manchmal auch als Roaming bezeichnet. Ein Vorteil eines solchen Roamings kann darin bestehen, dass weniger Shuttles benötigt werden, als in Ebenen-gebundenen Systemen, und dass die Flexibilität des ungebundenen Systems höher ist.

Das Shuttle-System kann zumindest zwei Vertikalförderer und zumindest zwei Bergewagen umfassen. Das Shuttle-System kann auch genau zwei Vertikalförderer und genau zwei Bergewagen umfassen. Eine Anzahl an Vertikalförderern kann von einer Grösse, beispielsweise einer Anzahl an Lagerplätzen des Shuttle-Systems abhängen.

Vorzugsweise beherbergt jede Kabine genau einen Bergewagen. Sind zumindest zwei Vertikalförderer und zumindest zwei Bergewagen vorhanden, so besteht hinsichtlich beider Bauteile eine vorteilhafte Redundanz: Fällt ein Vertikalförderer aus oder ist ein Bergewagen defekt, so stehen jeweils ein zweiter Vertikalförderer und ein zweiter Bergewagen zur Verfügung.

Der zweite Aufnahmeabschnitt kann oberhalb des ersten Aufnahmeabschnitts angeordnet sein. Alternativ kann der zweite Aufnahmeabschnitt neben dem ersten Aufnahmeabschnitt, hinter dem ersten Aufnahmeabschnitt, oder unterhalb des ersten Aufnahmeabschnitts angeordnet sein.

Sind die beiden Aufnahmeabschnitte übereinander angeordnet, so kann ihr vertikaler Abstand dahingehend minimiert sein, dass dem Ladegut oder dem Shuttle und dem Bergewagen zwar vertikal ausreichend Platz zur Verfügung steht, aber in vertikaler Richtung keine ungenutzten Freiräume bleiben.

Alternativ kann der Abstand so gewählt werden, dass in einer Transferposition der oben in der Kabine angeordnete Aufnahmeabschnitt einen Transfer mit einer angrenzenden Regal-Ebene, also beispielsweise die Ausfahrt des Bergewagens, erlaubt, und der unten in der Kabine angeordnete Aufnahmeabschnitt einen Transfer mit der darunterliegenden angrenzenden Regal-Ebene, also beispielsweise die Ausfahrt des Shuttles, erlaubt. Eine solche Gestaltung der Kabine führt zwar meist dazu, dass oberhalb des Shuttles oder oberhalb des Ladeguts und/oder oberhalb des Vertikalförderers ungenutzt Freiräume bleiben, eine Ausdehnung der Kabine in vertikaler Richtung (d.h. ihre Höhe) also grösser ist, als unbedingt nötig. Gleichzeitig kann eine solche Gestaltung der Kabine jedoch eine Steuerung des Vertikalförderers sowie einen Betrieb entsprechender Sensoren etc. vereinfachen. So muss stets beispielsweise nur einer der Aufnahmeabschnitte korrekt im Hinblick auf eine angrenzende Regal-Ebene positioniert werden, da der andere Aufnahmeabschnitt automatisch korrekt im Hinblick auf die darüber oder darunter liegende Regal-Ebene positioniert ist.

Die Aufnahmeabschnitte können auch vertikal versetzt, nämlich entweder nebeneinander oder hintereinander angeordnet sein. Sind die Aufnahmeabschnitte hintereinander angeordnet, so kann der zweite Aufnahmeabschnitt für den Bergewagen regal-abgewandt in der Kabine angeordnet sein, da er seltener gebraucht wird, als der erste Aufnahmeabschnitt.

Das Shuttle-System kann zumindest eine regalseitige Sperre umfassen, welche eine geöffnete und eine geschlossene Position einnehmen kann, wobei die Sperre in der geöffneten Position einem Shuttle eine Einfahrt von einer Regal-Ebene in den ersten Aufnahmeabschnitt des Vertikalförderers erlaubt, wenn sich der Vertikalförderer in der Transfer-Position befindet, und wobei die Sperre in der geschlossenen Position dem Shuttle diese Einfahrt versperrt.

Eine solche regalseitige Sperre kann verhindern, dass ein Shuttle oder ein Bergewagen aus einer Regal-Ebene kommend versehentlich oder fehlerbedingt in das Gerüst, beispielsweise den Aufzugschacht, einfährt und abstürzt. Gleichzeitig kann die regalseitige Sperre bewirken, dass ein Shuttle oder ein Bergewagen, welche sich in der Transfer-Position befinden, nur in kontrollierter Weise in die angrenzende Regal-Ebene einfahren, weil vor dem Einfahren die regalseitige Sperre in die geöffnete Position gebracht werden muss.

An jedem Durchgang zwischen einer Regal-Ebene und dem angrenzenden Gerüst, an dem ein Shuttle oder dergleichen in Transfer-Position in die Kabine einfahren kann, kann eine regalseitige Sperre angeordnet sein. Vorzugsweise sind sämtliche Durchgänge des Shuttle-Systems zwischen dem Vertikalförderer und einer der Regal-Ebenen mit einer solchen regalseitigen Sperre ausgerüstet.

Eine solche regalseitige Sperre kann auf beliebige Weise an einer Struktur des Regalbaus angebracht sein.

Die regalseitige Sperre kann als passive Sperre ausgeführt sein, welche keinen Aktor umfasst und nicht aktiv ansteuerbar ist. Alternativ kann die regalseitige Sperre aktiv ansteuerbar sein, beispielsweise einen Aktor umfassen, welcher eine Bewegung von der geöffneten in die geschlossene Position und zurück bewirken kann.

Der Vertikalförderer kann eine Betätigungseinrichtung umfassen, welche die regalseitige Sperre von der geschlossenen Position in die geöffnete Position und von der geöffneten Position in die geschlossene Position bewegen kann.

Eine im Vertikalförderer, beispielsweise in der Kabine angeordnete Betätigungseinrichtung kann einen einfachen Aufbau und eine robuste und zuverlässige Funktionsweise bewirken, da die regalseitigen Sperren in dieser Ausführungsvariante keine Aktoren benötigen und nicht einzeln angesteuert werden müssen. Anstelle von Aktoren an jedem Durchgang zum Vertikalförderer und somit auf jeder Regal-Ebene kann eine einzige Betätigungseinrichtung in der Kabine oder in dem Vertikalförderer genügen.

Die Betätigungseinrichtung kann das Öffnen der regalseitigen Sperre rein mechanisch bewirken. Auch andere Wirkmechanismen sind denkbar.

Alternativ kann dennoch an eine vorstehend angedeutete steuerungstechnische Lösung mit entsprechenden Aktoren oder dergleichen an jeder regalseitigen Sperre gedacht sein.

Das Shuttle-System kann ferner, zusätzlich oder alternativ, eine vertikalförderer-seitige Sperre umfassen, welche eine geöffnete und eine geschlossene Position einnehmen kann, wobei diese Sperre in der geöffneten Position einem Shuttle und/oder einem Bergewagen eine Einfahrt von einem Aufnahmeabschnitt des Vertikalförderers in eine Regal-Ebene erlaubt, wenn sich der Vertikalförderer in der Transfer-Position befindet, und wobei die Sperre in der geschlossenen Position dem Shuttle und/oder dem Bergewagen diese Einfahrt versperrt. Die am Vertikalförderer befindliche vertikalförderer-seitige Sperre kann entweder beide Aufnahmeabschnitte reversibel sperren, oder es können zwei solche vertikalförderer-seitige Sperren vorgesehen sein, wobei jedem Aufnahmeabschnitt zumindest eine solche Sperre zugeordnet ist. Es kann auch daran gedacht sein, dass nur einer der beiden Aufnahmeabschnitte eine solche vertikalförderer-seitige Sperre umfasst.

Ähnlich der regalseitigen Sperre verhindert auch die vertikalförderer-seitige Sperre einen versehentlichen oder fehlerbedingten Transfer, also das Losfahren eines in der Kabine befindlichen Shuttles oder Bergewagens in Richtung Regalbau, wenn sich die Kabine beispielsweise nicht in der Transfer-Position befindet. Ohne diese vertikalförderer-seitige Sperre könnten Sachschäden am Shuttle und Bergewagen und Personenschäden entstehen.

Sowohl die regalseitigen als auch die vertikalförderer-seitigen Sperren können zumindest auch manuell bedienbar sein. Es kann also daran gedacht sein, dass die Sperren beispielsweise von einem Aktor betrieben werden oder anderweitig aktiv ausgeführt sind, aber im Bedarfsfall zusätzlich durch Muskelkraft betätigt werden können. Auf diese Weise wird gewährleistet, dass eine Bedienperson im Bedarfsfall die betreffende Sperre händisch öffnen kann, da im Normal-Betriebsmodus die meisten Sperren geschlossen sind. Die vorhandenen Sperren werden im Normalbetriebs-Modus vorzugsweise nur dann und nur solange geöffnet, wie ein Transfer, beispielsweise die Einfahrt eines Shuttles aus der angrenzenden Regal-Ebene in den Aufnahmeabschnitt innerhalb der Kabine stattfindet.

Insbesondere diejenige vertikalförderer-seitige Sperre, welche die ungewollte Ausfahrt des Bergewagens verhindert, kann auch oder ausschliesslich manuell, also durch Muskelkraft bedienbar sein. Somit werden steuerungs-bedingte Störungen vermieden, da eine Ausfahrt des Bergewagens nur möglich ist, wenn die entsprechende Bedienperson die vorgenannte Sperre händisch öffnet. Diejenige vertikalförderer-seitige Sperre, welche die ungewollte Ausfahrt des Shuttles verhindert, wird hingegen vorzugsweise durch einen Aktor geöffnet und geschlossen.

Ist zumindest eine vertikalförderer-seitige Sperre vorhanden, so ist diese vorzugsweise an der Kabine befestigt. Auf diese Weise werden für jeden Vertikalförderer nur eine oder zwei solcher Sperren benötigt.

Das Shuttle-System kann sowohl vertikalförderer-seitige Sperren als auch regalseitige Sperren umfassen. Gemäss Ausführungsbeispielen der vorliegenden Erfindung kann es jedoch genügen, jedem Durchgang eine regalseitige Sperre zuzuordnen, und auf vertikalförderer-seitige Sperren zu verzichten.

Im Rahmen der vorliegenden Erfindung werden auch solche Sperren als regalseitig bezeichnet, welche nahe des Durchgangs und gegebenenfalls sogar innerhalb des Gerüsts des Vertikalförderers angeordnet sind. Insbesondere befindet sich im Bereich jedes Durchgangs auf Höhe jeder Regal-Ebene eine solche regalseitige Sperre. Diese regalseitigen Sperren können an oder zwischen den Fahrschienen befestigt sein, welche ebenfalls ein Stück weit von der Regal-Ebene kommend in das Gerüst hineinragen können. Demgegenüber werden im Rahmen der vorliegenden Erfindung vorzugsweise solche Sperren als vertikalförderer-seitig betrachtet, welche an der Kabine befestigt sind.

Das Shuttle-System kann eine vertikalförderer-seitige Überbrückungs-Einrichtung umfassen, welche einen in der Transfer-Position vorliegenden Spalt zwischen dem Aufnahmeabschnitt und der angrenzenden Regal-Ebene überbrückt, um einen Transfer des Shuttles und/oder des Bergewagens zu ermöglichen.

Die Überbrückungs-Einrichtung kann an der Kabine angeordnet sein.

Die Überbrückungs- Einrichtung kann beispielsweise eine Einrichtung sein, welche den betreffenden Aufnahmeabschnitt zu der Regal-Ebene hin verschiebt, um den Spalt zu überbrücken. Es kann sich also um eine Verschiebe-Einrichtung handeln.

Alternativ kann die Kabine beispielsweise teleskopierbare oder anderweitig verlängerbare oder ausfahrbare Elemente umfassen, welche den Spalt überbrücken. Hierbei kann es sich beispielsweise um ausfahrbare oder herunterklappbare oder entsprechend schwenkbare Fahrschienen handeln, welche beispielsweise Fahrschienen, die als Aufnahmeabschnitt dienen, mit den Fahrschienen der angrenzenden Regal-Ebene verbinden.

Weiter alternativ kann die Überbrückungs-Einrichtung am Regal angeordnet sein. Abermals wäre dann aber an jedem Durchgang zwischen Regal-Ebene und Vertikalförderer eine Überbrückungs-Einrichtung nötig.

Es kann ferner daran gedacht sein, die Überbrückungs-Einrichtung in die regalseitige Sperre oder in die vertikalförderer-seitige Sperre zu integrieren. Die jeweilige Sperre kann beispielsweise einen kleinen Abschnitt der Fahrschienen umfassen und somit ähnlich einer klappbaren Eisenbahn-Brücke ausgebildet sein. Im geschlossenen Zustand hindert eine solche Sperre ein Shuttle und einen Bergewagen an einem fehlerbedingten Transfer. In der geöffneten Position überbrückt eine solche Sperre den Spalt zwischen Regalbau und Vertikalförderer.

In sämtlichen Ausführungsvarianten aller vorbeschriebenen Sperren können diese eine Rückstell-Einrichtung, beispielsweise eine Feder oder ein anderes Kraftspeicher-Element, umfassen. Die Rückstell-Einrichtung kann, insbesondere durch Beaufschlagen der Sperre mit einer entsprechend gerichteten Rückstellkraft, bewirken, dass die Sperre sich vorzugsweise in der geschlossenen Position befindet. Bei Betätigung der Sperre durch einen Aktor oder eine Betätigungs-Einrichtung und bei manueller Betätigung kann die Rückstellkraft überwunden werden. Sobald eine Rückstell-Einrichtung, eine Betätigungs-Einrichtung oder eine Bedienperson die Sperre jedoch nicht mehr mit einer entgegen der Rückstell-Kraft wirkenden Kraft beaufschlagen, um die Sperre in die geöffnete Position zu bringen oder in dieser Position zu halten, schliesst die Sperre dank der vorzugsweise vorhandenen Rückstell-Einrichtung automatisch.

Alle vorgenannten Varianten können einen sicheren Transfer des Shuttles und/oder des Bergewagens erlauben. Unter einem Transfer wird hierbei eine Fahrt des Shuttles und/oder des Bergewagens von dem Aufnahmeabschnitt innerhalb der Kabine in die angrenzende Regal-Ebene oder zurück verstanden.

Sind die Spalte sehr schmal, so kann an Ausführungsbeispiele des Shuttle-Systems ohne Überbrückungs-Einrichtung gedacht sein. Auch wenn die Shuttles und/oder Bergewagen beispielsweise sehr viele in Reihe angeordnete Räder oder anderweitige Merkmale oder Eigenschaften aufweisen, welche ein sicheres Überqueren des Spalts ermöglichen, kann auf die Überbrückungs-Einrichtung verzichtet werden.

Bergewagen und/oder Shuttles mit beispielsweise acht Rädern können fähig sein, einen Spalt ohne Überbrückungs-Einrichtung zu überwinden, falls die Abmessungen und Beschaffenheit der Räder und die Breite des Spalts dies zulassen.

Die weiter oben erwähnte Betätigungs-Einrichtung und die vorstehend erwähnte Überbrückungs-Einrichtung können Bestandteil derselben Einrichtung sein. Die Überbrückungs-Einrichtung kann alternativ als Betätigungseinrichtung wirken oder diese umfassen. Beides gilt insbesondere, wenn die Überbrückungs-Einrichtung vertikalförderer-seitig angeordnet ist.

Eine solche Kombination aus Überbrückungs- und Betätigungs-Einrichtung kann einen einfachen und kostengünstigen Aufbau bewirken, da zwei Funktionen in einem Bauteil verwirklicht sind.

Ein Shuttle-System mit einer regalseitigen Sperre, einer Betätigungseinrichtung und einer vertikalförderer-seitigen Sperre wie vorstehend beschrieben kann eingerichtet sein, so dass die Betätigungseinrichtung in der Transfer-Position sowohl die vertikalförderer-seitige Sperre als auch die angrenzende regalseitige Sperre von der geschlossenen in die geöffnete und von der geöffneten in die geschlossene Position bewegen kann. Die Betätigungs-Einrichtung kann ein beliebiger geeigneter Aktor sein. Sie kann auch ein Bestandteil, beispielsweise ein Abschnitt der Überbrückungs-Einrichtung, oder die Überbrückungs-Einrichtung selbst sein.

Sind nur regalseitige Sperren vorhanden, so kann das Shuttle-System eingerichtet sein, so dass die Betätigungseinrichtung in der Transfer-Position die regalseitige Sperre von der geschlossenen in die geöffnete und von der geöffneten in die geschlossene Position bewegen kann.

Sind regalseitig und vertikalförderer-seitig Sperren vorhanden, so sind diese in der Transfer-Position vorzugsweise im Wesentlichen auf gleicher Höhe angeordnet. Da zum Zweck des Transfers, wenn beispielsweise ein Shuttle aus der Kabine in die angrenzende Regal-Ebene einfahren will, beide gleichzeitig geöffnet werden müssen, ist es vorteilhaft, wenn die Betätigungseinrichtung beide Sperren, vorzugsweise gleichzeitig oder im Wesentlichen gleichzeitig, bedient. Etwaige Kosten für mehrere Einrichtungen zur Öffnung der einzelnen Sperren werden durch eine für beide Sperren zuständige Betätigungs-Einrichtung vermieden.

Je nach Anordnung der Aufnahmeabschnitte und einer lichten Höhe oberhalb der Aufnahmeabschnitte sowie einer Lage der untersten Regal-Ebene kann es nötig sein, eine Grube vorzusehen, in welche die Kabine des Vertikalförderers einfahren kann. Dies kann, falls die Abmessungen eine solche Bauweise erfordern, einem in der Kabine befindlichen Shuttle und/oder Bergewagen die Einfahrt in die unterste Regal-Ebene ermöglichen.

Neben dem vorstehend beschriebenen Shuttle-System umfasst die vorliegende Erfindung auch das nachstehend beschriebene **Verfahren.** Merkmale und Einzelheiten, welche vorstehend in Bezug auf das System beschrieben wurden, gelten auch für das nachstehend beschriebene Verfahren und umgekehrt.

Ein Verfahren zum Betreiben eines vorstehend beschriebenen Shuttle-Systems umfasst einen Normalbetriebs-Modus und einen Bergewagen-Modus. Im Normalbetriebs-Modus herrscht vorzugsweise ein Automatikbetrieb vor, welcher beispielsweise von einer Steuerung, etwa einer Lagersteuerung gesteuert wird. Optional können die Shuttles auch teilweise oder weitgehend vollständig autonom operieren, indem sie beispielsweise mit Vertikalförderern, anderen Shuttles, oder anderen Bestandteilen des Shuttle-Systems kommunizieren und/oder sich mit Hilfe von Bordtechnik wie beispielsweise Sensoren teilweise oder weitgehend vollständig autonom bewegen.

Im Normalbetriebs-Modus bewegen sich die Shuttles selbsttätig horizontal innerhalb der Regal-Ebenen und wechseln optional mittels des Vertikalförderers die Regal-Ebenen. Alternativ können die Shuttles im Normal-Betriebs-Modus selbsttätig die Vertikalförderer nutzen, um Ladegüter an die Vertikalförderer zu übergeben oder von diesen zu übernehmen.

Im Bergewagen-Modus befördert der Vertikalförderer den Bergewagen in eine Transfer-Position, um einen Einsatz des Bergewagens in der angrenzenden Regal-Ebene zu erlauben.

Ein Übergang in den Bergewagen-Modus unterbricht vorzugsweise den Normalbetriebs-Modus innerhalb des gesamten Regalbaus oder innerhalb zumindest eines Abschnitts des Regalbaus. Vorzugsweise wird der Normalbetriebs-Modus jedenfalls in dem- oder denjenigen Vertikalförderer(n) unterbrochen, welche(r) den oder die einzusetzenden Bergewagen auf diejenige Regal-Ebene transportieren sollen, in der die zu beseitigende Störung vorliegt.

Der Bergewagen-Modus kann automatisch oder auf Anforderung, d.h. durch irgendeine Eingabe einer Bedienperson gestartet werden. Beispielsweise kann ein Sensor einen Fehler innerhalb des Shuttle-Systems, beispielsweise ein gestörtes Shuttle oder heruntergefallene Ladegüter, erkennen. Weiterhin kann es vorkommen, dass die Lagersteuerung einen Fehler meldet, wenn ein gestörter Ablauf innerhalb des Shuttle-Systems erkannt wird. Vorzugsweise erfordert ein Wechsel in den Bergewagen-Modus jedoch zumindest ein Zutun einer Bedienperson. Dies kann eine Eingabe wie ein Knopfdruck oder dergleichen sein, oder das Öffnen einer im Normalbetriebs-Modus verschlossenen Tür, was einer impliziten Anforderung gleichkommt. Alternative Aktionen einer Bedienperson, welche den Wechsel in den Bergewagen-Modus bewirken oder mit-bewirken, sind denkbar. Es kann auch daran gedacht sein, dass ein Bergewagen-Modus ausschliesslich durch eine Aktion, beispielsweise eine Anforderung einer Bedienperson gestartet wird. Eine Aktion kann beispielsweise das Betätigen eines Bedienelement, beispielsweise eines Schalters oder dergleichen sein. Alternativ kann dem Vertikalförderer zumindest eine überwachte Tür zugeordnet sein, deren Öffnen durch eine Bedienperson die vorgenannte Aktion darstellt.

Im Allgemeinen kann daran gedacht sein, dem Vertikalförderer beispielsweise eine Wartungsplattform zuzuordnen, welche über eine Leiter erreichbar sein kann. Ferner kann daran gedacht sein, Wartungsplattformen auf unterschiedlichen Höhen entlang des Vertikalförderers anzuordnen, wobei eine Bedienperson beispielsweise über eine Treppe zu den Wartungsplattformen und von dort in den Bergewagen gelangen kann, der sich in der Kabine befindet. Hierbei kann daran gedacht sein, entweder vor dem Einstieg der Leiter oder Treppe oder zwischen jeder Wartungsplattform und dem Vertikalförderer eine überwachte Tür anzuordnen.

Der Bergewagen-Modus muss nicht das gesamte Shuttle-System betreffen. Liegt beispielsweise in einer bestimmten Regal-Ebene eine Störung vor, so kann lediglich diese Regal-Ebene oder ein Abschnitt dieser Regal-Ebene, in dem sich beispielsweise das heruntergefallene Ladegut befindet, in den Bergewagen-Modus versetzt werden. Vorzugsweise wird auch ein nahe an dem beispielsweise heruntergefallenen Ladegut befindlicher Vertikalförderer in den Bergewagen-Modus versetzt, während andere, insbesondere weiter entfernt liegende Vertikalförderer im Wesentlichen im Normalbetriebs-Modus verbleiben können. Auch die übrigen Regal-Ebenen, in denen keine Störung vorliegt, können im Wesentlichen im Normal-Betriebsmodus verbleiben.

Alternativ kann daran gedacht sein, zwar nicht das gesamte Shuttle-System, aber dennoch mehr als die von der Störung betreffende Regal-Ebene in den Bergewagen-Modus zu versetzen. Beispielsweise können ein oder zwei benachbarte Regal-Ebenen, welche oberhalb und/oder unterhalb der von der Störung betroffenen Regal-Ebene liegen, vollständig oder teilweise in den Bergewagen-Modus versetzt werden. Welche und wie viele benachbarte Regal-Ebenen in den Bergewagen-Modus versetzt werden, kann von einer Ausgestaltung des Regalbaus, beispielsweise auch von einem vertikalen Abstand der Regal-Ebenen zueinander abhängen. Es kann beispielsweise konkret daran gedacht sein, zusätzlich zu der von der Störung betroffenen Regal-Ebene die unmittelbar darüber liegende und die beiden unmittelbar darunter liegenden Regal-Ebenen zumindest abschnittsweise in den Bergewagen-Modus zu versetzen.

Umfasst das Shuttle-System zumindest zwei Bergewagen und zumindest zwei Vertikalförderer, so können nach Anforderung eines Bergewagens für eine Regalebene zwei Vertikalförderer zwei Bergewagen auf Höhe der anforderungs-gemässen Regal-Ebene befördern. Wenn beispielsweise eine erste Bedienperson mit dem ersten Bergewagen in eine Regal-Ebene einfährt, in welcher beispielsweise eine Störung beseitigt werden soll, und diese erste Bedienperson mit dem ersten Bergewagen verunglückt, ein medizinisches Problem (Herzinfarkt, Schlaganfall, etc.) auftritt, oder aus irgendeinem anderen Grund eine zweite Bedienperson in der betreffenden Regal-Ebene benötigt wird, so steht der zweite Bergewagen bereits zur Verfügung. Eine zweite Bedienperson kann dann ohne Zeitverlust unmittelbar nach Auftreten des beispielsweise medizinischen Problems in die Regal-Ebene einfahren, um die erste Bedienperson zu unterstützen oder zu retten.

Regal-Ebenen oder Abschnitte von Regal-Ebenen, welche sich im Bergewagen-Modus befinden, werden vorzugsweise nicht mehr von Shuttles angesteuert und etwaige bereits dort befindliche Shuttles werden vorzugsweise gestoppt oder beispielsweise zu einer ausserhalb des im Bergewagen-Modus befindlichen Bereichs liegenden Ladestation oder zu einem anderen Ort dirigiert.

Um die betroffenen Bereiche vom Bergewagen-Modus zurück in den Normalbetriebs-Modus zu versetzen, kann eine Eingabe einer Bedienperson erforderlich sein. Weiterhin kann, insbesondere zusätzlich, daran gedacht sein, nur dann in den Normalbetriebs-Modus zurückzukehren, wenn entsprechende Sensoren oder dergleichen festgestellt haben, dass der zuvor im Regalbau befindliche Bergewagen wieder in die Kabine des Vertikalförderers eingefahren ist.

Im Normalbetriebs-Modus kann eine Steuerung des Shuttle-Systems im Wesentlichen automatisiert durch eine Lagersteuerung erfolgen. Nach einem Übergang in den Bergewagen-Modus kann die Lagersteuerung optional eine Abarbeitung sämtlicher oder zumindest einiger verbleibender Ebenen-Wechsel durch die Vertikalförderer veranlassen. Auf diese Weise kann nach Beendigung des Bergewagen-Modus und Übergang in den Normalbetriebs-Modus dieser nahtlos starten, ohne dass gestoppte oder pausierte Aufträge zur Abarbeitung anstehen und womöglich Störungen verursachen. Etwaige Bereiche des Regalbaus oder des Shuttle-Systems, welche nicht in den Bergewagen-Modus versetzt wurden, können währenddessen im Normalbetriebs-Modus verbleiben.

Nach einem Übergang in den Bergewagen-Modus können solche Shuttles, deren Energiespeicher eine gewisse Untergrenze unterschreitet, und welche einen Ebenen-Wechsel für sich selbst oder ihr Ladegut benötigen, sich entweder zu einer in der betreffenden Regal-Ebene befindlichen Ladestation bewegen, oder in einen Energiespar-Modus wechseln, oder einen anderen Auftrag ausführen, welcher keinen Ebenen-Wechsel erfordert. Um einen anderen Auftrag auszuführen kann es nötig sein, ein bereits aufgenommenes Ladegut wieder am Ursprungsort abzusetzen oder an geeigneter Stelle zwischenzulagern. Die vorgenannten Massnahmen können verhindern, dass ein Energiespeicher eines Shuttles eine kritische Grenze unterschreitet oder sogar vollständig entleert wird.

Als Energiespeicher der Shuttles kommen beispielsweise bekannte Akkus oder Kondensatoren in Betracht.

Es kann daran gedacht sein, einen Energiespeicher eines Shuttles und/oder eines Bergewagens im Vertikalförderer aufzuladen. Hierfür kann der Vertikalförderer beispielsweise eine geeignete Ladestelle, insbesondere innerhalb der Kabine, umfassen. Der Bergewagen ist zwar vorzugsweise rein händisch betrieben und benötigt für den eigenen Antrieb keinen Energiespeicher. Allerdings wird er oftmals benutzt, um Shuttles mit leerem Energiespeicher zumindest teilweise aufzuladen. Durch diesen Schritt sowie die Ladestelle kann beispielsweise sichergestellt werden, dass bei länger andauernden Störungen im Vertikalförderer ein in die Kabine eingefahrenes Shuttle nicht wegen leerem Akku oder im Allgemeinen entleerten Energiespeicher "liegenbleibt" .

Die Shuttles und die Vertikalförderer können Einrichtungen zur Kommunikation umfassen. Beispielsweise können Shuttles die Kabine des Vertikalförderers anfordern, wenn sie sich nahe oder unmittelbar vor einem Durchgang zwischen Regal-Ebene und Vertikalförderer befinden, und für das aufgenommene Ladegut oder sich selbst eine Beförderung auf eine andere Regal-Ebene benötigen.

Das Shuttle-System kann eine bekannte zentrale Lager-Steuerung umfassen, welche beispielsweise Aufträge an die Shuttles vergibt und das Shuttle-System auf Fehler hin überwacht.

Der Vertikalförderer kann einen Galgen zum Abseilen einer verletzten Bedienperson umfassen.

Der Vertikalförderer kann eine Entnahmeöffnung umfassen. Diese ist vorzugsweise ebenerdig angeordnet, so dass eine Bedienperson das Shuttle oder den Bergewagen aus der Kabine entnehmen kann.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Den Figuren 1 und 2 eine Vorder- und eine Rückansicht eines Vertikalförderers 1 gemäss einem Ausführungsbeispiel der vorliegenden Erfindung, sowie in
den Figuren 3 und 4 eine Kabine 6 eines Vertikalförderers 1 gemäss der vorliegenden Erfindung in beladenem und unbeladenem Zustand,
den Figuren 5 und 6 eine Vorder- und eine Rückansicht eines Vertikalförderers 1 gemäss einem weiteren Ausführungsbeispiel der vorliegenden Erfindung,
der Figur 7 eine Ansicht nach Figur 2 mit einem ausschnittsweise dargestellten angrenzendem Regalbau 17,
der Figur 8 eine Ansicht nach Figur 6 mit einem ausschnittsweise dargestellten angrenzendem Regalbau 17, und
der Figur 9 einen Ausschnitt eines Gerüsts 4 mit einer regalseitigen Sperre 9.

### Ausführungsbeispiel

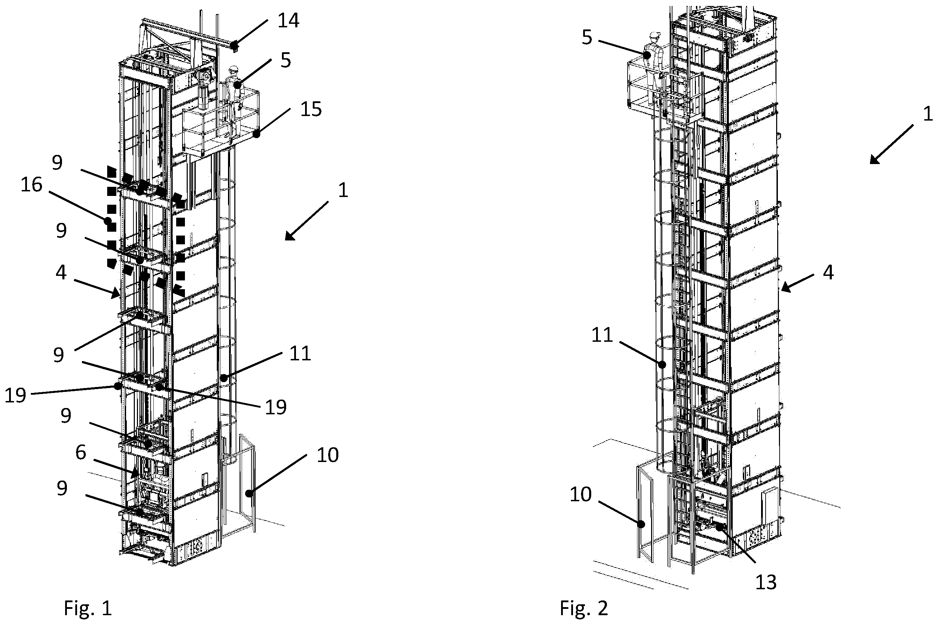

Die Figuren 1 und 2 zeigen einen Vertikalförderer 1 mit einem Gerüst 4 und einer Kabine 6. Eine Leiter mit Fallschutz 11 und eine Bedienperson 5 oben am Vertikalförderer 1 sind ebenso zu erkennen wie eine überwachte Tür 10. Ein Durchgang 16, welcher von dem Gerüst 4 des Vertikalförderers 1 in die angrenzende (in Figur 1 nicht dargestellte) Regal-Ebene des Regalbaus 17 führt, ist angedeutet.

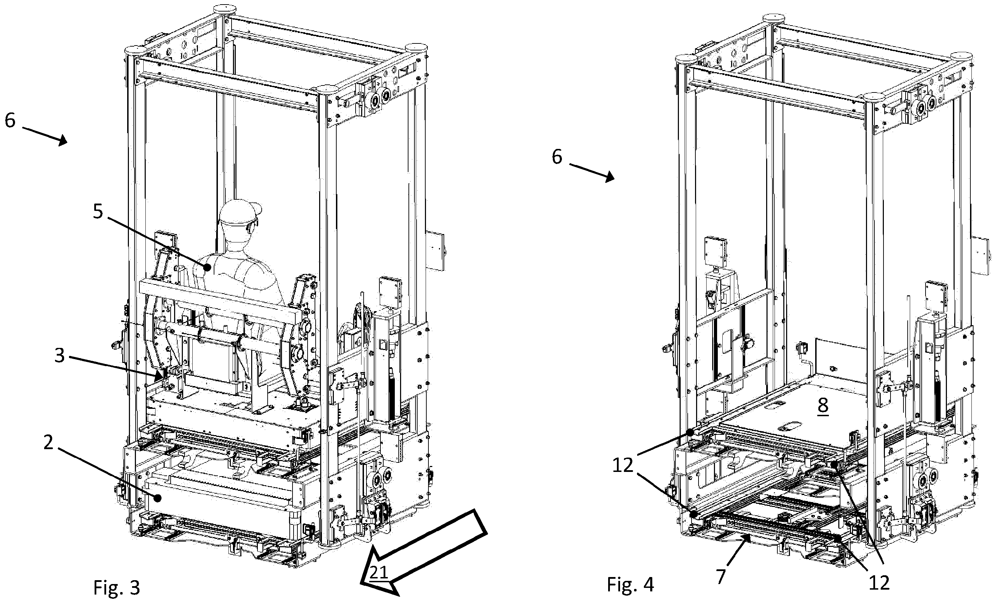

In Figur 3 ist eine Bedienperson 5 auf einem Bergewagen 3 erkennbar. Die Bedienperson 5 ist in der Anordnung nach Figur 3 bereit, mit dem Bergewagen 3 in den Regalbau 17 einzufahren. Unterhalb des Bergewagens 3 ist ein Shuttle 2 erkennbar.

In Figur 4 sind ein erster Aufnahmeabschnitt 7 mit zwei Schienen 12 und ein darüber befindlicher zweiter Aufnahmeabschnitt 8 mit zwei Schienen 12 erkennbar.

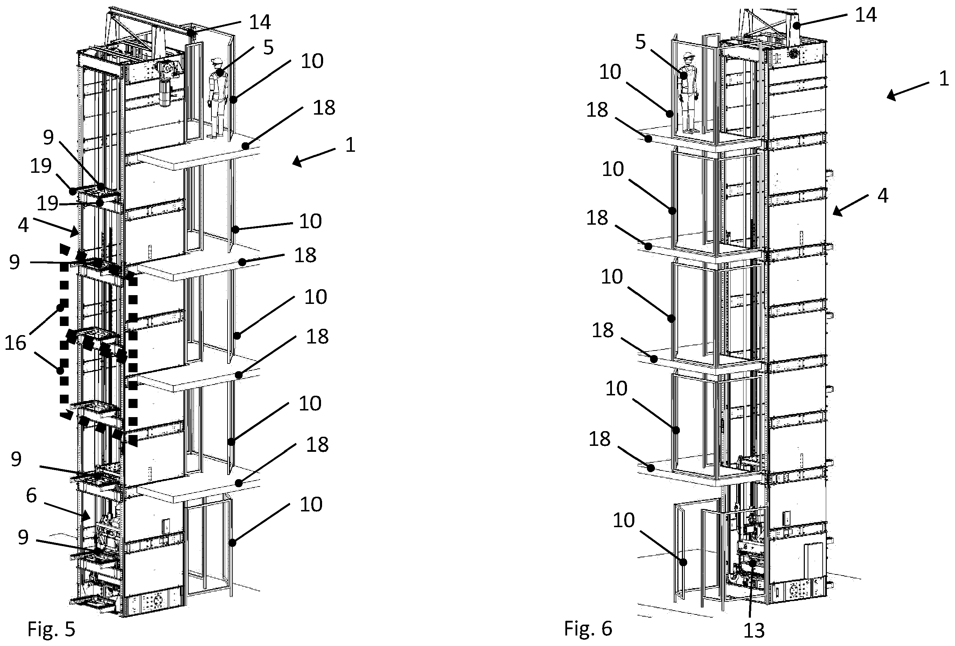

Die Figuren 5 und 6 zeigen eine Alternative zu dem Vertikalförderer 1 gemäss den Figuren 1 und 2 in Vorder- und Rückansicht. Anstelle der Leiter 11 umfasst der in den Figuren 5 und 6 gezeigte Vertikalförderer 1 Wartungsbühnen 18. Die Wartungsbühnen 18 können fest installierte und unmittelbar an den Vertikalförderer 1 angrenzende Stahlstrukturen sein. Die höher gelegenen Wartungsbühnen 18 können über eine (nicht dargestellte) Treppe erreichbar sein. Die Wartungsbühnen 18 gemäss den Figuren 5 und 6 können ähnlich der Wartungsplattform 15 gemäss den Figuren 1 und 2 ausgebildet sein. Auf Höhe jeder Wartungsbühne 18 befindet sich eine überwachte Tür 10. Ferner sind in Figur 5 zwei der vorhandenen Durchgänge 16 angedeutet.

In den Figuren sind der besseren Übersicht halber insbesondere im Falle von mehrfach vorhandenen Merkmalen nicht alle dieser Merkmale mit Bezugsziffern versehen. Beispielsweise sind nur einige der Durchgänge 16 in den Figuren 1 und 5 mit Bezugsziffern versehen. Dasselbe gilt für die regalseitigen Sperren 9 und die im Regalbau 17 befindlichen Fahrschienen 19.

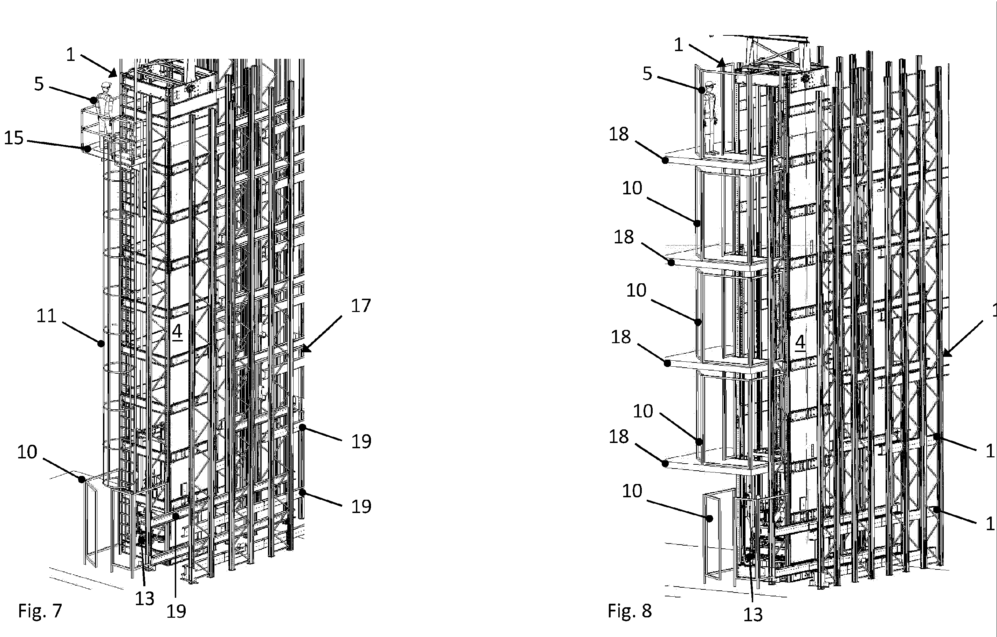

Der Regalbau 17, an welchen der Vertikalförderer 1 angrenzt, ist der besseren Übersicht halber in den Ausführungsformen der Figuren 1 und 2 sowie 5 und 6 nicht gezeigt. In den Figuren 7 und 8 ist jeweils ein kleiner Teil des Regalbaus 17 dargestellt. Einerseits ist sichtbar, wie der Regalbau 17 zur Ausnutzung des vorhandenen Platzes den Vertikalförderer 1 auch seitlich umgibt. Weiterhin ist zumindest im Vergleich mit den Figuren 1, 2, 5 und 6 erkennbar, dass sich der Regalbau 17 über die Durchgänge 16 des Vertikalförderers 1 an diesen anschliesst.

In den Figuren 7 und 8 sind einige der Fahrschienen 19 des Regalbaus 17 angedeutet.

Eine Lage der in Figur 1 andeutungsweise dargestellten Übergange 16 ist in den Figuren 7 und 8 der besseren Übersicht halber nicht explizit eingezeichnet. Auch ein im Grenzbereich zwischen Regalbau 17 und Vertikalförderer 1 in Transfer-Position vorliegender Spalt zwischen einem der Aufnahmeabschnitte 7, 8 und den Fahrschienen 19 ist der besseren Übersicht halber in den Figuren 7 und 8 nicht gesondert eingezeichnet.

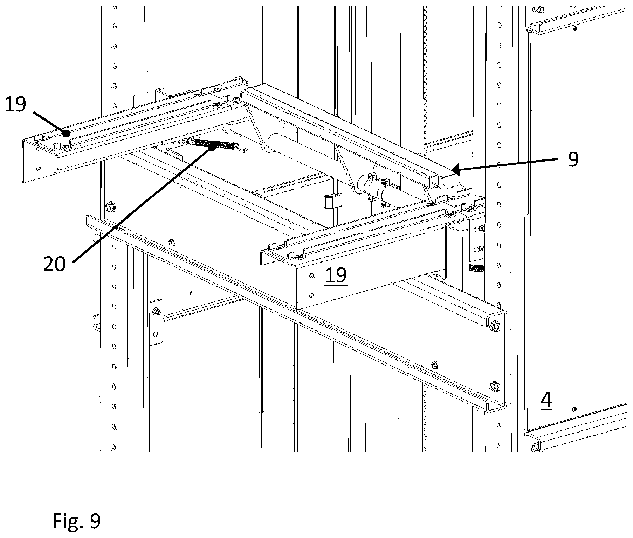

In Figur 9 ist eine vergrösserte Darstellung eines Ausschnitts gemäss den Figuren 1 und 5 dargestellt. Die Vertikalförderer 1 gemäss den Figuren 1 und 5 sind auf der Seite, an der sich die Durchgänge 16 befinden, identisch gebaut. In Figur 9 ist eine regalseitige Sperre 9 mit einer Rückstellfeder 20 erkennbar. Ferner sind Ausschnitte der in die angrenzende (nicht dargestellte) Regal-Ebene hineinragenden Fahrschienen 19 erkennbar.

In Figur 9 ist ferner erkennbar, dass die regal-seitige Sperre 9, welche unmittelbar an die im Regalbau 17 verlaufenden Fahrschienen 19 angrenzt, sich zwar räumlich innerhalb des Gerüsts 4 des Vertikalförderers 1 befindet, aber dennoch korrekterweise als "regalseitig" bezeichnet wird.

Bezugnehmend auf die Figuren 1 bis 8 erklärt sich die Funktionsweise des erfindungsgemässen Shuttle-Systems folgendermassen:
Im Normalbetriebs-Modus fördert der Vertikalförderer 1 Shuttles 2, welche die Regal-Ebene wechseln sollen, von einer ersten Regal-Ebene in eine zweite, d.h. in eine andere Regal-Ebene. In den Ausführungsformen der Figuren 1 und 5 ist jeder Regal-Ebene eine regalseitige Sperre 9 und ein Durchgang 16 zugeordnet. Um einen Transfer des Shuttles 2 von der Regal-Ebene in den ersten Aufnahmeabschnitt 7 oder andersherum zu ermöglichen, müssen die in den Figuren 1 und 5 nur angedeuteten Fahrschienen 19 der angrenzenden Regal-Ebene und die Schienen 12 des ersten Aufnahmeabschnitts 7 bündig oder zumindest fluchtend angeordnet sein. Eine solche Position der Kabine 6, welche einen Transfer ermöglicht, wird als Transfer-Position bezeichnet.

Es kann daran gedacht sein, dass ein als Bordmittel vorhandener (nicht gezeigter) Sensor des Shuttles 2 die regalseitige Sperre 9 erkennt und das Shuttle 2 stoppt. Eine Einfahrt des Shuttles 2 über die Fahrschienen 19 in die Regal-Ebene ist daher erst möglich, wenn diese Sperre 9, beispielsweise mit Hilfe eines (nicht gezeigten) Aktors, geöffnet, in Figur 9 also durch Drehen heruntergeklappt wurde. Hierbei kann entweder jeder regalseitigen Sperre 9 ein Aktor zugeordnet sein. Alternativ kann der Kabine 6 ein solcher Aktor zugeordnet sein. Die Rückstellfeder 20 sorgt dafür, dass die Sperre 9 sich in der geschlossenen Position befindet, welche in Figur 9 dargestellt ist, sofern kein Aktor auf sie einwirkt.

Während der vertikalen Fahrten der Kabine 6 im Normalbetriebs-Modus befindet sich der Bergewagen 3 stets auf den Schienen 12 des zweiten Aufnahmeabschnitts 8. Die Bedienperson 5 besteigt den Bergewagen 3 nur, wenn zumindest ein Abschnitt des Shuttle-Systems in den Bergewagen-Modus übergegangen ist, und die Bedienperson 5 mit dem Bergewagen 3 eine Fahrt innerhalb des Regalbaus 17 absolvieren muss.

Im Bergewagen-Modus wird die Kabine 6 in eine vertikale Position entlang des Gerüsts 4 bewegt, in welcher die Schienen 12 des zweiten Aufnahmeabschnitts 8 im Wesentlichen fluchtend oder bündig mit den Fahrschienen 19 derjenigen Regal-Ebene angeordnet sind, in welche die Bedienperson 5 mit dem Bergewagen 3 einfahren möchte. Diese bündige oder fluchtende Ausrichtung erfolgt an den Durchgängen 16 und ist in den Figuren 7 und 8 auf Grund der gewählten Perspektive nicht erkennbar.

Das Einfahren in die Regal-Ebene erfolgt dann nach manuellem Öffnen der regalseitigen Sperre 9 in Richtung des Pfeils 21, aus Sicht der Bedienperson 5 also rückwärts. Der Bergewagen 3 wird hierbei händisch, bspw. über ein (nicht gezeigtes) Handrad bewegt, über welches die (nicht gezeigten) Räder des Bergewagens 3 angetrieben werden. Diese (nicht gezeigten) Räder sorgen für eine Fortbewegung auf den Schienen 12 und insbesondere auf den Fahrschienen 19 in der Regal-Ebene.

Ein Öffnen der überwachten Tür 10 kann allein oder zusätzlich mit anderen Signalen, beispielsweise einer entsprechenden Anforderung durch eine Bedienperson 5 durch Betätigen eines Knopfes oder Hebels (nicht dargestellt), einen Übergang in den Bergewagen-Modus bewirken. In der Ausführungsform gemäss den Figuren 1, 2 und 7 kann eine Bedienperson 5 die einzige dem Vertikalförderer 1 zugeordnete Tür 10 öffnen und anschliessend über die Leiter 11 bis zu der Wartungsplattform 15 gelangen. In der Ausführungsform gemäss den Figuren 5, 6 und 8 kann eine Bedienperson 5 über eine (nicht dargestellte) Treppe zu den Wartungsbühnen 18 gelangen. Jeder Wartungsbühne 18 ist eine überwachte Tür 10 zugeordnet, über deren Öffnung die Bedienperson 5 einen Übergang in den Bergewagen-Modus bewirken kann. Mit Hilfe der Leiter 11 oder der (nicht gezeigten) Treppe kann die Bedienperson 5 auf eine erforderliche Höhe gelangen, um eine Fahrt mit dem Bergewagen 3 innerhalb des Regalbaus 17 absolvieren zu können.

Über eine bodennahe Entnahmeöffnung 13 können Shuttles 2 und gegebenenfalls auch Bergewagen 3 aus der Kabine 6 entnommen werden.

Eine Wartungsplattform 15 erlaubt einer Bedienperson 5 den Aufenthalt im oberen Bereich des Vertikalförderers 1, falls dies erforderlich ist. Ein dort befindlicher Galgen 14 erlaubt das Abseilen einer verletzten Bedienperson 5, falls nötig. In der Ausführungsvariante gemäss den Figuren 5 und 6 erlauben die Wartungsbühnen 18 auf komfortable Weise einen Aufenthalt und Zutritt auf verschiedenen Höhen entlang des Gerüsts 4.

Obwohl nur zwei bevorzugte Ausführungsbeispiele der Erfindung beschrieben und dargestellt wurde, ist es offensichtlich, dass der Fachmann zahlreiche **Modifikationen** hinzufügen kann, ohne Umfang der Erfindung zu verlassen. Insbesondere kann an folgende Modifikationen gedacht sein:
Der Vertikalförderer 1, insbesondere die Kabine 6 kann eine (nicht gezeigte) Überbrückungs-Einrichtung umfassen, um einen (nicht gezeigten) Spalt zu den angrenzenden (nicht gezeigten) Regal-Ebenen zu überbrücken.

Die Kabine 6 kann eine (nicht gezeigte) Lade-Einrichtung zum Aufladen eines Energiespeichers des Shuttles 2 oder des Bergewagens 3 umfassen.

Alternativ oder zusätzlich zu den regal-seitigen Sperren 9 können (nicht gezeigte) vertikalförderer-seitige Sperren vorhanden sein, welche der Kabine 6 zugeordnet sind. Es kann auch daran gedacht sein, gänzlich auf etwaige solcher Sperren 9 zu verzichten.

Der zweite Aufnahmeabschnitt 8 ist, wie in Figur 4 zu sehen, vorzugsweise oberhalb des ersten Aufnahmeabschnitts 7 angeordnet. Alternativ kann der zweite Aufnahmeabschnitt 8 auch unterhalb des ersten Aufnahmeabschnitts 7 angeordnet sein. Wie ebenfalls in Figur 4 erkennbar, benötigt ein zweiter Aufnahmeabschnitt 7 eine sehr geringe lichte Höhe, sofern er nur für die Beförderung unbeladener Shuttles 2 eingesetzt wird. Der Bergewagen 3, welcher das Einsteigen der Bedienperson 5 in der Kabine 6 ermöglichen muss, benötigt demgegenüber eine um ein Vielfaches grössere lichte Höhe. Damit ein von der Kabine 6 befördertes Shuttle 2, welches auf einer oberhalb des zweiten Aufnahmeabschnitts 8 befindlichen ersten Aufnahmeabschnitt 7 liegt, in eine unterste Regel-Ebene einfahren kann, kann es nötig sein, eine Grube vorzusehen, in welche die Kabine 6 einfahren kann.

Das Öffnen der Tür 10 muss nicht zwingend einen Übergang in den Bergewagen-Modus bewirken. Die Tür 10 kann Bestandteil einer Zutritts-Verhinderungs-Einrichtung, beispielsweise eines Zauns sein, welcher verhindert, dass Unbefugte zu nahe an den Vertikalförderer 1 herantreten. Ein solcher Zaun oder dergleichen kann eine Entnahmeöffnung 13 vor unbefugtem Zugriff schützen und Unbefugte entsprechend vor Verletzungen bewahren. Dies gilt für alle gezeigten Ausführungsformen.

Wenn anstatt der Leiter mit Fallschutz 11 gemäss den Figuren 1 und 2 eine Leiter ausserhalb eines durch die überwachte Tür 10 abgesicherten Bereichs angeordnet ist, so können Türen, ggf. überwachte Türen 10 auf mehreren Ebenen vorhanden sein. Dies ist in der Ausführungsform gemäss den Figuren 5 und 6 gezeigt. So wird sichergestellt, dass ein Zugang von einer (in den Figuren 5 und 6 nicht dargestellten) Treppe zu dem Vertikalförderer 1 und somit in die Kabine 6 und ggf. in den Regalbau 17 nicht ohne weiteres erfolgen kann, bzw. durch die Überwachung der Türen 10 bemerkt wird.

Die regal-seitige Sperre 9 kann auch als aktive Sperre ausgeführt sein, der ein Aktor zugeordnet ist. Vorzugsweise kann die Sperre 9 jedoch auch, wenn sie als aktive Sperre ausgeführt ist, im Bedarfsfall manuell geöffnet werden.

### Bezugszeichenliste

| | | |
|---|---|---|
| 1 | Vertikalförderer | |
| 2 | Shuttle | |
| 3 | Bergewagen | |
| 4 | Gerüst | |
| 5 | Bedienperson | |
| 6 | Kabine | |
| 7 | Erster Aufnahmeabschnitt | |
| 8 | Zweiter Aufnahmeabschnitt | |
| 9 | regalseitige Sperre | |
| 10 | Überwachte Tür | |
| 11 | Leiter mit Fallschutz | |
| 12 | Schiene | |
| 13 | Entnahmeöffnung | |
| 14 | Galgen | |
| 15 | Wartungsplattform | |
| 16 | Durchgang | |
| 17 | Regalbau | |
| 18 | Wartungsbühne | |
| 19 | Fahrschiene | |
| 20 | Rückstellfeder | |
| 21 | Pfeil | |
| 22 | | |
| 23 | | |
| 24 | | |
| 25 | | |
| 26 | | |
| 27 | | |
| 28 | | |
| 29 | | |
| 30 | | |
| 31 | | |
| 32 | | |
| 33 | | |

## Patentansprüche

1. Shuttle-System umfassend einen Regalbau mit mehreren Regal-Ebenen,
wobei die Regal-Ebenen Fahrwege für Shuttles (2) umfassen,
wobei das Shuttle-System ferner zumindest ein Shuttle (2) umfasst, welches sich innerhalb der Regale-Ebenen auf den Fahrwegen bewegen kann,
wobei das Shuttle-System ferner zumindest einen Vertikalförderer (1) umfasst, welcher eingerichtet ist, ein Shuttle (2) oder ein Ladegut von einer ersten in eine zweite Regal-Ebene zu befördern,
wobei das Shuttle-System ferner zumindest einen Bergewagen (3) umfasst, mit dem eine Bedienperson (5) in eine Regal-Ebene einfahren kann,
wobei der Vertikalförderer (1) ein sich vertikal erstreckendes Gerüst (4) und eine entlang dieses Gerüsts (4) vertikal bewegliche Kabine (6) umfasst,
**dadurch gekennzeichnet, dass**
die Kabine (6) einen ersten Aufnahmeabschnitt (7) zur Aufnahme eines Shuttles (2) oder Ladeguts und einen zweiten Aufnahmeabschnitt (8) zur Aufnahme eines Bergewagens (3) umfasst, und
die Kabine (6) im Hinblick auf zumindest zwei Regal-Ebenen eine Transfer-Position einnehmen kann, in welcher der erste und/oder der zweite Aufnahmeabschnitt (7, 8) sich im Wesentlichen auf Höhe einer angrenzenden Regal-Ebene befindet, so dass ein Shuttle (2) und/oder ein Bergewagen (3) von der Kabine (6) in die angrenzende Regal-Ebene einfahren oder ein Ladegut in dieser Richtung übergeben werden kann, oder ein Shuttle (2) oder Bergewagen (3) aus der angrenzenden Regal-Ebene in die Kabine (6) einfahren oder ein Ladegut in dieser Richtung übergeben werden kann.

2. Shuttle-System nach Anspruch 1, **gekennzeichnet durch** zumindest zwei Vertikalförderer (1) und zumindest zwei Bergewagen (3).

3. Shuttle-System nach einem der vorangehenden Ansprüche, **dadurch gekennzeichnet, dass** der zweite Aufnahmeabschnitt (8) oberhalb des ersten Aufnahmeabschnitts (7) angeordnet ist.

4. Shuttle-System nach zumindest einem der vorangehenden Ansprüche, **gekennzeichnet durch** zumindest eine regalseitige Sperre (9), welche eine geöffnete und eine geschlossene Position einnehmen kann, wobei die Sperre (9) in der geöffneten Position einem Shuttle (2) oder einem Bergewagen (3) eine Einfahrt von einer Regal-Ebene in den ersten Aufnahmeabschnitt (7) des Vertikalförderers (1) erlaubt, wenn sich der Vertikalförderer (1) in der Transfer-Position befindet, und wobei die Sperre (9) in der geschlossenen Position dem Shuttle (2) oder dem Bergewagen (3) diese Einfahrt versperrt.

5. Shuttle-System nach Anspruch 4, **dadurch gekennzeichnet, dass** der Vertikalförderer (1) eine Betätigungseinrichtung umfasst, welche die Sperre (9) von der geschlossenen Position in die geöffnete Position und von der geöffneten Position in die geschlossene Position bewegen kann.

6. Shuttle-System nach zumindest einem der vorangehenden Ansprüche, **gekennzeichnet durch** eine vertikalförderer-seitige Sperre, welche eine geöffnete und eine geschlossene Position einnehmen kann, wobei die Sperre (9) in der geöffneten Position einem Shuttle (2) und/oder einem Bergewagen (3) eine Einfahrt von einem Aufnahmeabschnitt (7, 8) des Vertikalförderers (1) in eine Regal-Ebene erlaubt, wenn sich der Vertikalförderer (1) in der Transfer-Position befindet, und wobei die vertikalförderer-seitige Sperre in der geschlossenen Position dem Shuttle (2) und/oder dem Bergewagen (3) diese Einfahrt versperrt.

7. Shuttle-System nach zumindest einem der vorangehenden Ansprüche, **gekennzeichnet durch** eine vertikalförderer-seitige Überbrückungs-Einrichtung, welche einen in der Transfer-Position vorliegenden Spalt zwischen dem Aufnahmeabschnitt (7, 8) und der angrenzenden Regal-Ebene überbrückt, um einen Transfer des Shuttles (2) und/oder des Bergewagens (3) zu ermöglichen.

8. Shuttle-System nach zumindest den Ansprüchen 5 und 7, **dadurch gekennzeichnet, dass** die Betätigungs-Einrichtung und die Überbrückungs-Einrichtung Bestandteil derselben Einrichtung sind, oder dass die Überbrückungs-Einrichtung als Betätigungseinrichtung wirkt oder diese umfasst.

9. Shuttle-System nach zumindest den Ansprüchen 4 bis 6, **dadurch gekennzeichnet, dass** die Betätigungseinrichtung in der Transfer-Position die regalseitige Sperre (9) und, falls vorhanden, die vertikalförderer-seitige Sperre von der geschlossenen in die geöffnete und von der geöffneten in die geschlossene Position bewegen kann.

10. Verfahren zum Betreiben eines Shuttle-Systems gemäss einem der Ansprüche 1 bis 9, **dadurch gekennzeichnet, dass** sich die Shuttles (2) in einem Normal-Betriebs-Modus selbsttätig horizontal innerhalb der Regal-Ebenen bewegen, und optional mittels des Vertikalförderers (1) die Regal-Ebenen wechseln, und wobei der Vertikalförderer (1) in einem Bergewagen-Modus den Bergewagen (3) in eine Transfer-Position befördert, um einen Einsatz des Bergewagens (3) in der angrenzenden Regal-Ebene zu erlauben.

11. Verfahren nach Anspruch 10 zum Betreiben eines Shuttle-Systems gemäss einem der Ansprüche 2 bis 9, **dadurch gekennzeichnet, dass** nach Anforderung eines Bergewagens (3) für eine Regalebene zumindest zwei Vertikalförderer (1) zumindest zwei Bergewagen (3) auf Höhe der anforderungs-gemässen Regal-Ebene befördern.

12. Verfahren nach einem der Ansprüche 10 oder 11, **dadurch gekennzeichnet, dass** im Normalbetriebs-Modus eine Steuerung des Shuttle-Systems im Wesentlichen automatisiert durch eine Lagersteuerung erfolgt, und dass nach einem Übergang in den Bergewagen-Modus die Lagersteuerung optional eine Abarbeitung sämtlicher oder zumindest einiger verbleibender Ebenen-Wechsel durch die Vertikalförderer (1) veranlasst.

13. Verfahren nach zumindest einem der Ansprüche 10 bis 12, **dadurch gekennzeichnet, dass** nach einem Übergang in den Bergewagen-Modus solche Shuttles (2), deren Energiespeicher eine gewisse Untergrenze unterschreitet, und welche einen Ebenen-Wechsel benötigen oder Ladegut aufgenommen haben, welches einen Ebenen-Wechsel benötigt, sich entweder zu einer in der betreffenden Ebene befindlichen Ladestation bewegen, oder in einen Energiespar-Modus wechseln, oder einen anderen Auftrag ausführen, welcher keinen Ebenen-Wechsel erfordert.

14. Verfahren nach zumindest einem der Ansprüche 10 bis 13, **dadurch gekennzeichnet, dass** ein Energiespeicher eines Shuttles (2) und/oder eines Bergewagens (3) im Vertikalförderer (1) aufgeladen werden kann.

## Claims

1. Shuttle system comprising a rack structure with multiple rack levels, wherein the rack levels comprise travel paths for shuttles (2),
wherein the shuttle system further comprises at least one shuttle (2) which is movable within the rack levels along the travel paths,
wherein the shuttle system further comprises at least one vertical conveyor (1) configured to transport a shuttle (2) or a load from a first rack level to a second rack level,
wherein the shuttle system further comprises at least one recovery vehicle (3) by means of which an operator (5) can enter a rack level,
wherein the vertical conveyor (1) comprises a vertically extending frame (4) and a cabin (6) which is vertically movable along said frame (4),
**characterized in that**
the cabin (6) comprises a first receiving section (7) for receiving a shuttle (2) or a load and a second receiving section (8) for receiving a recovery vehicle (3), and
the cabin (6) is configured to assume, with respect to at least two rack levels, a transfer position in which the first and/or the second receiving section (7, 8) is substantially at the height of an adjacent rack level, such that a shuttle (2) and/or a recovery vehicle (3) can move from the cabin (6) into the adjacent rack level or a load can be transferred **in that** direction, or a shuttle (2) or recovery vehicle (3) can move from the adjacent rack level into the cabin (6) or a load can be transferred **in that** direction.

2. Shuttle system according to claim 1, **characterized by** at least two vertical conveyors (1) and at least two recovery vehicles (3).

3. Shuttle system according to any one of the preceding claims, **characterized in that** the second receiving section (8) is arranged above the first receiving section (7).

4. Shuttle system according to at least one of the preceding claims, **characterized by** at least one rack-side lock (9) which can assume an open and a closed position, wherein in the open position the lock (9) allows a shuttle (2) or a recovery vehicle (3) to enter from a rack level into the first receiving section (7) of the vertical conveyor (1) when the vertical conveyor (1) is in the transfer position, and wherein in the closed position the lock (9) blocks such entry of the shuttle (2) or the recovery vehicle (3).

5. Shuttle system according to claim 4, **characterized in that** the vertical conveyor (1) comprises an actuating device which is capable of moving the lock (9) from the closed position to the open position and from the open position to the closed position.

6. Shuttle system according to at least one of the preceding claims, **characterized by** a vertical-conveyor-side lock which can assume an open and a closed position, wherein in the open position the lock (9) allows a shuttle (2) and/or a recovery vehicle (3) to enter from a receiving section (7, 8) of the vertical conveyor (1) into a rack level when the vertical conveyor (1) is in the transfer position, and wherein in the closed position the vertical-conveyor-side lock blocks such entry of the shuttle (2) and/or the recovery vehicle (3).

7. Shuttle system according to at least one of the preceding claims, **characterized by** a vertical-conveyor-side bridging device which bridges a gap present in the transfer position between the receiving section (7, 8) and the adjacent rack level in order to enable transfer of the shuttle (2) and/or the recovery vehicle (3).

8. Shuttle system according to at least claims 5 and 7, **characterized in that** the actuating device and the bridging device form part of the same device, or that the bridging device acts as or comprises the actuating device.

9. Shuttle system according to at least claims 4 to 6, **characterized in that** in the transfer position the actuating device is capable of moving the rack-side lock (9) and, if present, the vertical-conveyor-side lock from the closed position to the open position and from the open position to the closed position.

10. Method for operating a shuttle system according to any one of claims 1 to 9, **characterized in that** the shuttles (2) move autonomously in a normal operating mode horizontally within the rack levels and optionally change rack levels by means of the vertical conveyor (1), and wherein the vertical conveyor (1) transports the recovery vehicle (3) in a recovery-vehicle mode to a transfer position to allow deployment of the recovery vehicle (3) in the adjacent rack level.

11. Method according to claim 10 for operating a shuttle system according to any one of claims 2 to 9, **characterized in that**, upon request of a recovery vehicle (3) for a rack level, at least two vertical conveyors (1) transport at least two recovery vehicles (3) to the level corresponding to the request.

12. Method according to any one of claims 10 or 11, **characterized in that** in the normal operating mode the control of the shuttle system is performed essentially automatically by a warehouse control system, and that after switching to the recovery-vehicle mode the warehouse control system optionally initiates completion of all or at least some remaining level changes by the vertical conveyors (1).

13. Method according to at least one of claims 10 to 12, **characterized in that** after switching to the recovery-vehicle mode such shuttles (2) whose energy storage device falls below a certain lower limit and which require a level change, or which have taken up a load requiring a level change, either move to a charging station located in the respective level, or switch to an energy-saving mode, or execute another task which does not require a level change.

14. Method according to at least one of claims 10 to 13, **characterized in that** an energy storage device of a shuttle (2) and/or of a recovery vehicle (3) can be charged in the vertical conveyor (1).

## Revendications

1. Système de navette comprenant une structure de rayonnage avec plusieurs niveaux de rayonnage, les niveaux de rayonnage comprenant des voies de circulation pour des navettes (2),
le système de navette comprenant en outre au moins une navette (2) qui peut se déplacer à l'intérieur des niveaux de rayonnage sur les voies de circulation,
le système de navette comprenant en outre au moins un convoyeur vertical (1) qui est conçu pour transporter une navette (2) ou une marchandise d'un premier niveau de rayonnage à un deuxième niveau de rayonnage,
le système de navette comprenant en outre au moins un chariot de récupération (3) avec lequel un opérateur (5) peut entrer dans un niveau de rayonnage,
le convoyeur vertical (1) comprenant un échafaudage s'étendant verticalement (4) et une cabine (6) mobile verticalement le long de cet échafaudage (4),
**caractérisé en ce que**
la cabine (6) comprend une première portion de réception (7), destinée à recevoir une navette (2) ou une marchandise, et une deuxième portion de réception (8), destinée à recevoir un chariot de récupération (3), et
la cabine (6) peut occuper, par rapport à au moins deux niveaux de rayonnage, une position de transfert dans laquelle la première et/ou la deuxième portion de réception (7, 8) se trouve(nt) sensiblement à la hauteur d'un niveau de rayonnage adjacent, de sorte qu'une navette (2) et/ou un chariot de récupération (3) puisse entrer dans le niveau de rayonnage adjacent à partir de la cabine (6) ou qu'une marchandise puisse être transférée dans cette direction, ou qu'une navette (2) ou un chariot de récupération (3) puisse entrer dans la cabine (6) à partir du niveau de rayonnage adjacent ou qu'une marchandise puisse être transférée dans cette direction.

2. Système de navette selon la revendication 1,
**caractérisé par** au moins deux convoyeurs verticaux (1) et au moins deux chariots de récupération (3).

3. Système de navette selon l'une des revendications précédentes,
**caractérisé en ce que** la deuxième portion de réception (8) est disposée au-dessus de la première portion de réception (7).

4. Système de navette selon l'une au moins des revendications précédentes,
**caractérisé par** au moins un dispositif de blocage (9) côté rayonnage, qui peut prendre une position ouverte et une position fermée, le dispositif de blocage (9) permettant, en position ouverte, à une navette (2) ou à un chariot de récupération (3) d'entrer dans la première portion de réception (7) du convoyeur vertical (1) depuis un niveau de rayonnage lorsque le convoyeur vertical (1) se trouve dans la position de transfert, et le dispositif de blocage (9) empêchant, en position fermée, la navette (2) ou le chariot de récupération (3) d'y entrer.

5. Système de navette selon la revendication 4,
**caractérisé en ce que** le convoyeur vertical (1) comprend un dispositif d'actionnement qui peut déplacer le dispositif de blocage (9) de la position fermée à la position ouverte et de la position ouverte à la position fermée.

6. Système de navette selon l'une au moins des revendications précédentes,
**caractérisé par** un dispositif de blocage côté convoyeur vertical, qui peut prendre une position ouverte et une position fermée, le dispositif de blocage (9) permettant, en position ouverte, à une navette (2) et/ou à un chariot de récupération (3) d'entrer dans un niveau de rayonnage depuis une portion de réception (7, 8) du convoyeur vertical (1) lorsque le convoyeur vertical (1) se trouve dans la position de transfert, et le dispositif de blocage côté convoyeur vertical empêchant, en position fermée, la navette (2) et/ou le chariot de récupération (3) d'y entrer.

7. Système de navette selon l'une au moins des revendications précédentes,
**caractérisé par** un dispositif de pontage côté convoyeur vertical, qui comble un espace présent dans la position de transfert entre la portion de réception (7, 8) et le niveau de rayonnage adjacent, afin de permettre un transfert de la navette (2) et/ou du chariot de récupération (3).

8. Système de navette selon au moins les revendications 5 et 7,
**caractérisé en ce que** le dispositif d'actionnement et le dispositif de pontage font partie intégrante du même dispositif, ou **en ce que** le dispositif de pontage agit comme dispositif d'actionnement ou comprend celui-ci.

9. Système de navette selon au moins les revendications 4 à 6,
**caractérisé en ce que** le dispositif d'actionnement peut, dans la position de transfert, déplacer le dispositif de blocage (9) côté rayonnage et, si présent, le dispositif de blocage côté convoyeur vertical, de la position fermée à la position ouverte et de la position ouverte à la position fermée.

10. Procédé pour faire fonctionner un système de navette selon l'une des revendications 1 à 9,
**caractérisé en ce que** les navettes (2) se déplacent automatiquement à l'horizontale à l'intérieur des niveaux de rayonnage, en mode de fonctionnement normal, et changent optionnellement de niveau de rayonnage à l'aide du convoyeur vertical (1), et
le convoyeur vertical (1) transporte le chariot de récupération (3) vers une position de transfert, en mode chariot de récupération, afin de permettre l'utilisation du chariot de récupération (3) dans le niveau de rayonnage adjacent.

11. Procédé selon la revendication 10 pour faire fonctionner un système de navette selon l'une des revendications 2 à 9,
**caractérisé en ce qu'**après la demande d'un chariot de récupération (3) pour un niveau de rayonnage, au moins deux convoyeurs verticaux (1) transportent au moins deux chariots de récupération (3) à la hauteur du niveau de rayonnage correspondant à la demande.

12. Procédé selon l'une des revendications 10 ou 11,
**caractérisé en ce que**, en mode de fonctionnement normal, la commande du système de navette s'effectue de façon sensiblement automatisée par une commande d'entrepôt, et
**en ce qu'**après un passage en mode chariot de récupération, la commande d'entrepôt déclenche optionnellement le traitement de tous ou au moins de certains changements de niveau restants par les convoyeurs verticaux (1).

13. Procédé selon l'une au moins des revendications 10 à 12, **caractérisé en ce qu'**après un passage en mode chariot de récupération, les navettes (2), dont l'accumulateur d'énergie passe en dessous d'une certaine limite inférieure et qui ont besoin d'un changement de niveau ou ont pris en charge une marchandise qui nécessite un changement de niveau, se déplacent soit vers une station de chargement située au niveau correspondant, soit passent en mode économie d'énergie, soit exécutent une autre tâche qui ne nécessite pas de changement de niveau.

14. Procédé selon l'une au moins des revendications 10 à 13, **caractérisé en ce qu'**un accumulateur d'énergie d'une navette (2) et/ou d'un chariot de récupération (3) peut être rechargé dans le convoyeur vertical (1).
